(19)

Europäisches Patentamt

European Patent Office

Office européen des brevets

(11) **EP 4 535 811 A1**

(12) **EUROPEAN PATENT APPLICATION**

(43) Date of publication:
**09.04.2025 Bulletin 2025/15**

(21) Application number: **23202231.9**

(22) Date of filing: **06.10.2023**

(51) International Patent Classification (IPC):
*H04N 23/66* (2023.01)   *G06T 7/00* (2017.01)
*H04N 23/695* (2023.01)   *H04N 23/90* (2023.01)
*B64U 101/30* (2023.01)   *H04N 13/00* (2018.01)

(52) Cooperative Patent Classification (CPC):
**H04N 23/66; H04N 23/695;** B64U 2101/30;
G06V 10/16; G06V 20/56; H04N 13/239;
H04N 23/698; H04N 23/90; H04N 2013/0074

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Helsing GmbH**
**81671 Munich (DE)**

(72) Inventor: **TUNA, Ahmet**
**81671 Munich (DE)**

(74) Representative: **Rummler, Felix**
**Maucher Jenkins**
**Liebigstraße 39**
**80538 München (DE)**

Remarks:
Amended claims in accordance with Rule 137(2)
EPC.

(54) **SYSTEM, METHOD, AND COMPUTER PROGRAM PRODUCT FOR IMAGE SENSOR FUSION**

(57)     According to an embodiment of the present disclosure, there is provided a computer-implemented method for image sensor fusion, the method comprising: determining an intersection space between respective fields of view capturable by a plurality of image sensors; and determining overlapping regions on respective images captured by the image sensors, wherein the overlapping regions correspond to at least a part of the intersection space.

Fig. 1

**Description**

**Technical Field**

The present disclosure relates to systems, methods, and computer program products for image sensor fusion.

**Background**

Autonomously or partly autonomously acting systems such as self-driving vehicles or unmanned aerial vehicles (UAVs) require the use of sensors to determine a surrounding environment. Optical sensors can enable a system to virtually reconstruct the environment. If a plurality of optical sensors is used, a combination of individual sensor signals allows for a more accurate and reliable reconstruction of the environment.

Combining the signals of optical sensors requires real-time determination if objects detected by the sensors are identical, which requires efficient signal processing. Known approaches are computationally demanding and, therefore, real-time processing requires considerable computing resources and has a high energy consumption.

There is a need for systems and methods that address these shortcomings.

**Summary**

The present invention is defined in the independent claims. The dependent claims recite selected optional features.

In the following, each of the described methods, apparatuses, examples, and aspects, which do not fully correspond to the invention as defined in the claims is thus not according to the invention and is, as well as the whole following description, present for illustration purposes only or to highlight specific aspects or features of the claims.

According to a first aspect of the present disclosure, there is provided a computer-implemented method for image sensor fusion, the method comprising: determining an intersection space between respective fields of view capturable by a plurality of image sensors; and determining overlapping regions on respective images captured by the image sensors, wherein the overlapping regions correspond to at least a part of the intersection space.

The method of the present disclosure relates to the problem of sensor fusion. In sensor-fusion, one of the main tasks is to couple/associate sensors which collect shared information/data. The general idea is that one can combine the information about the same object from multiple cameras to obtain a more refined picture than from any single camera alone. The method of the present disclosure enables determining whether an object, seen from multiple perspectives by different image sensors (cameras), is in fact one and the same object. If it is, the information from the different image sensors can be combined (fused), thereby obtaining more accurate information about the object.

In particular, the method of the present disclosure enables determining if and to what extent different image sensors have the same or overlapping fields of view. An object can thus be determined to be within the field of view of more than one sensor, thereby enabling more reliable and accurate detection, localisation, tracking or other analysis of the object. Also, it is possible to eliminate or filter false positive detections.

The method of the present disclosure can be employed in multi-sensor systems with fixed or moving sensors, e.g., cameras. In multi-sensor systems with fixed sensors, the relative position or orientation of cameras to another is known before or when detecting an object. For example, multiple sensors of the system can be mounted on a fixed chassis in a car, tank, plane, or they can be formed by surveillance cameras at known positions. In these cases, although a decision whether two objects are the same can be derived from re-registered pixels or similar computation, the present method may be applied to improve the robustness of the decision making. However, the present method can also be advantageously employed in situations with ad-hoc overlaps of cameras mounted on moving platforms such as drones or ground vehicles, due to spontaneous path crossings. For example, a first camera can be arranged on a drone flying over an area that is observed by a second camera mounted on a tank. In conventional systems, in these cases each sensor would generate candidate object detections based on the partial information derived individually from each camera. These candidate object detections would then be provided to and processed by a central multi-sensor tracking or information system. However, due to inaccuracies in the meta data, differences in distance or perspective or other sensory differences, the informational gap between the two (or more) sensor outputs can be quite substantial, leading to cases where objects cannot be associated with one another, because their perception from different sensors differ too much from one another, or because their localization estimates (based on single camera localization) are not consistent with one another. The present method eliminates or reduces such inaccuracies by enabling a determination if a detected object is present in two or more overlapping fields of view of different sensors.

In an embodiment, a plurality of image signals is obtained from two or more image sensors, e.g., cameras. The image sensors may be movable, e.g., mounted on a movable platform such as an unmanned aerial vehicle (UAV) or drone. In an embodiment, the movement of the image sensors, or of the platforms to which they are mounted, may be controlled so as to create temporal overlaps of the respective fields of view. For example, it is possible to control the movement of a first platform relative to a plurality of second platforms so that the field of view of the camera on the first platform is caused to cross the fields of views of the second platforms and create a series of overlaps and corresponding intersection spaces. In an exemplary implementation, a drone carrying the first camera may be controlled to fly over a plurality of vehicles on the ground carrying the second cameras. Accordingly, in an embodiment, the method comprises: detecting the presence of one or more first ones of said plurality of image sensors; and controlling a vehicle carrying a second one of said plurality of image sensors to cause the field of view of said second image sensor to consecutively or simultaneously overlap the fields of view of one or more or all of said first image sensors.

In an embodiment, determining the intersection space includes approximating a field of view of an image sensor as a convex polyhedron. In particular, the field of view is approximated by determining a set of half-space inequalities. More particularly, convex polyhydron vertices are determined in local camera image frames. The vertices are transformed to a global frame (Earth-centered coordinate field, ECEF). The half-spaces are determined in the global frame.

The set of half-space inequalities may be combined into a linear system which may then be solved. The approximation allows calculating the field of view with a comparably simple system of equations. Using half-space inequalities allows for fast processing, e.g., using parallel processing.

In an embodiment, at least one of the fields of view is approximated as a pyramid, in particular a rectangular pyramid. A pyramid-shaped field of view represents a sufficiently accurate approximation that reduces the processing required to determine the overlapping regions in the captured images.

The processing may be performed remotely, for example a remote server, or locally, for example by a processor of a drone carrying an image sensor.

In an embodiment, determining the intersection space includes solving the or a linear system by parallel computing, thereby to accelerate processing and potential object detection. In an embodiment, this may be implemented using GPUs, thereby enabling smaller or less powerful devices to perform the processing, e.g., mobile phones or devices deployed in a UAV.

In an embodiment, the method comprises processing image frames captured by said plurality of image sensors corresponding to said overlapping regions to detect an object captured by at least two of the plurality of image sensors. The detected object may be classified by allocating it to a selected one of a plurality of object classes. For example, an object may be classified based on its visible physical characteristics such as size, shape and/or movement (speed/acceleration). Classes may comprise characteristics for a plurality of objects. For example, an object may be classified as a "vehicle" due to features such as its rectangular shape when viewed from above and its movement. The detection and classification of objects that have been found to be within the (overlapping) fields of view of at least two image sensors provide more reliable and accurate results than the detection or classification by individual sensors. Furthermore, potential misinterpretations due to perspective effects can be eliminated.

In an embodiment, the method further comprises selecting the detected object for localisation, in particular by triangulation. In other words, the method can be used to first determine whether an object is present within the overlapping fields of view of at least two sensors and, only if that is the case, to cause that object to be localised using triangulation. Accordingly, detected objects can be filtered before they undergo further analysis, thereby enabling a more selective/-targeted use of available processing resources.

In an embodiment, the method comprises: determining a volume of the intersection space; and performing said processing only if the volume is below or above a predetermined threshold. In an embodiment, said processing is performed only if said volume is within a predetermined range. Accordingly, it is possible to determine to which extent there must be an overlap between fields of view of different sensors before objects within the overlapping regions in the images of the respective sensors are detected. For example, the overlap may be determined to be too small or too big to provide meaningful results. This determination may take into account physical parameters relating to individual image sensors, such as the size of the field of view, position, movement, etc.

According to second aspect of the present disclosure, there is also provided a system comprising: a first image sensor having a first field of view; a second image sensor having a second field of view; and a processing unit configured to receive input signals from the image sensors and comprising one or more processors and one or more storage devices, wherein the processing unit is configured to perform the computer-implemented method as described herein.

In an embodiment, the first image sensor and/or the second image sensors is movable and/or mounted on a movable platform, in particular an unmanned aerial vehicle.

According to third aspect of the present disclosure, there is provided a computer program product for loading into a memory of a computer, comprising instructions, that, when executed by a processor of the computer, cause the computer to execute a computer-implemented method as described herein.

**Brief Description of the Drawings**

The features, objects, and advantages of the present disclosure will become more apparent from the detailed description set forth below when taken in conjunction with the drawings in which:

Figure 1 schematically illustrates the operation of a system according to an embodiment of the present disclosure;

Figure 2 schematically illustrates some specific aspects of a system and method according to an embodiment of the present disclosure; and

Figure 3 illustrates a flow chart of a method according to an embodiment of the present disclosure.

## Detailed Description of Exemplary Embodiments

The present disclosure is directed to methods and systems for determining the intersection space of respective fields of view (FOVs) of a plurality of image sensors.

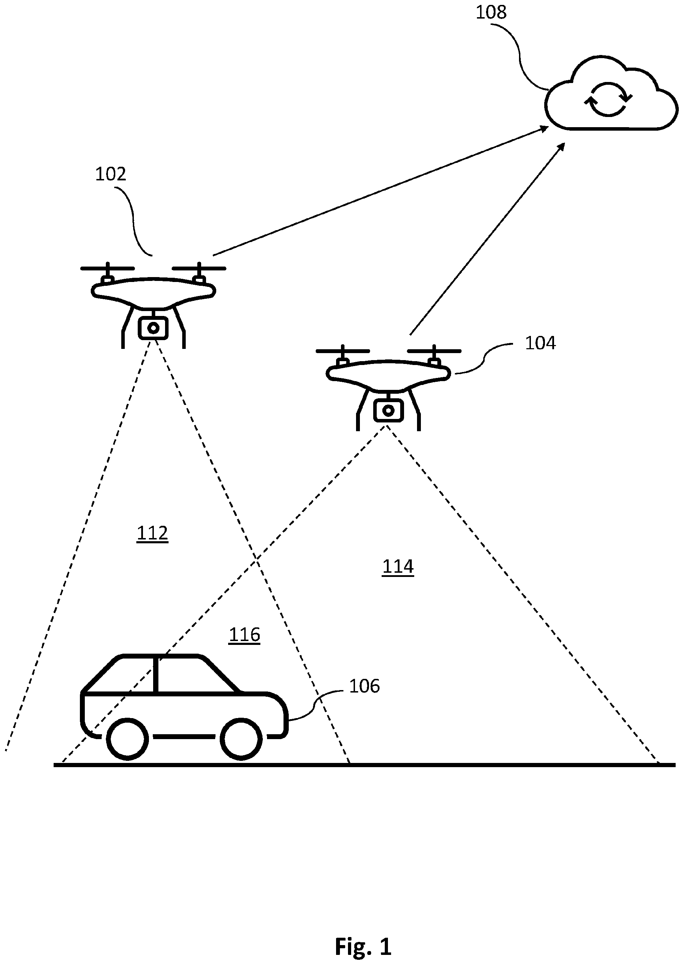

Figure 1 schematically illustrates the operation of a system according to an embodiment of the present disclosure. The system includes a first drone 102 and a second drone 104 each of which is provided with a camera for capturing images of the environment. The drones 102, 104 are communicatively coupled to a remote server 108. The remote server 108 is operable to control the drones 102, 104, and to receive signals from the drones 102, 104 representing captured images. The remote server 108 is operable to process the signals, for example to perform feature detection and identify and classify objects contained in the captured image frames.

The first and second drones 102, 104 have first and second FOVs 112, 114, respectively. The FOVs 112, 114 overlap in an area 116. In the illustrated example, the drones 102, 104 observe a vehicle 106. The vehicle 106 is fully contained in the first FOV 112 and partially contained in the second FOV 114, and thus also partially contained in the overlapping area 116. Accordingly, the second drone 104 captures different features of the vehicle 106 than the first drone 104. In addition, the first and second drones 102, 104 observe the vehicle from different angles/perspectives, which further contributes to having the second drone 106 capture different or differently appearing features of the vehicle 106 than the first drone.

The captured images are transmitted from the drones 102, 104 to the remote server 108 for processing. The processing includes determining if the FOVs 112, 114 overlap. Also, the processing includes determining the intersection space corresponding to the overlapping area 116, as described in more detail below. Thereby, it is possible to determine more accurately whether the captured features by the first and second drones 102, 104 belong to the same object (here: vehicle 106). This, in turn, enables a more accurate object detection and tracking.

In an embodiment, the respective FOV of each image sensor is approximated as a convex polyhedron by using a system of linear inequalities. That is, an FOV of an optical sensor can be described by a 3D rectangular pyramid (convex polyhedron). In an embodiment, to couple any combination of optical sensors (independent of the framework: ground-2-ground, ground-2-air, air-2-ground or air-2-air), the intersection between FOV pyramids is computed. By computing the intersection space, the intersection-over-union can be computed, and the amount of shared information/data can be quantified.

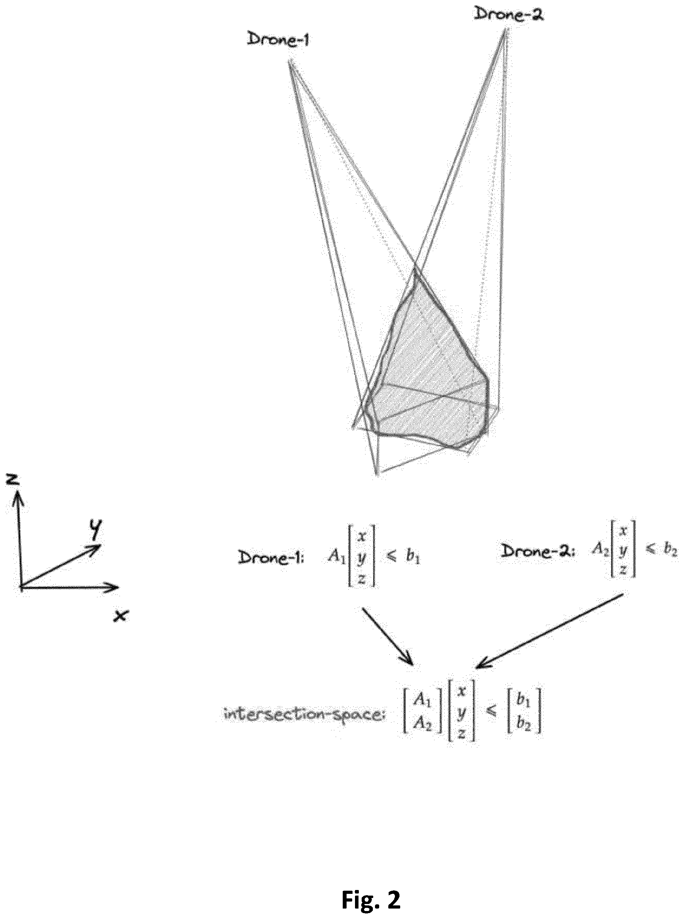

Figure 2 schematically illustrates some specific aspects of a system and method according to an embodiment of the present disclosure. In this embodiment, a first drone ("Drone-1") comprises a first image sensor, and a second drone ("Drone-2") comprises a second sensor. Each of the first and second sensors has a FOV which is approximated, as shown, as rectangular pyramids. The intersection between the FOVs is highlighted and can be calculated based on mathematical representations of the rectangular pyramids.

In particular, the FOVs are approximated based on half-space inequalities. Figure 2 illustrates this for convex pyramid shaped FOVs, which are referred to herein as FOV pyramids. The intersection space between two or more convex polyhedrons is described by a system of linear inequalities that is determined based on the two or more systems of linear inequalities that describe the FOVs of the two or more sensors. More particularly, a pyramid has five faces, and each face can be described by a half-space inequality, thus resulting in five half-space inequalities.

The system of the five half-space inequalities describes the FOV pyramid as follows:

$$\begin{bmatrix} a_{11} & a_{12} & a_{13} \\ \vdots & \vdots & \vdots \\ \vdots & \vdots & \vdots \\ \vdots & \vdots & \vdots \\ a_{51} & a_{52} & a_{53} \end{bmatrix} \begin{bmatrix} x \\ y \\ z \end{bmatrix} \leqslant \begin{bmatrix} b_{11} \\ b_{12} \\ b_{13} \\ b_{14} \\ b_{15} \end{bmatrix} \rightarrow A_1 \begin{bmatrix} x \\ y \\ z \end{bmatrix} \leqslant b_1$$

The five half-space inequalities may be used to determine the volume of the FOV pyramid. The volume of the FOV pyramid corresponds to the intersection space and enables quantifying the amount of shared information between different optical sensors. To this end, the system of half-space inequalities of the sensors is combined together into a linear system, as shown in Figure 2. The solution space of this new combined system describes the intersection space.

The vertices of the 3D FOV pyramid can be determined using position information of the camera. This information (vertices coordinates) is transformed into a global frame (ECEF) and the parameters of the A matrix and the b vector are determined directly in the global frame.

Accordingly, in an embodiment of the present invention, FOVs are described as convex polyhedrons via linear half-space inequalities. The intersection space of a plurality of image sensors is determined via a system of linear inequalities. In an embodiment, the present invention includes making an initial determination if and how much additional sensor information from nearby sensors can be used to improve classification and localization estimates of detections. This allows for selecting (and combining) the information from different cameras before submitting the detections to a global multi sensor tracking system, for example. This approach is computationally efficient because it allows focussing processing power on detections in overlapping FOVs of two or more sensors.

An example for this is triangulation: Instead of submitting two rather inaccurate single camera derived position estimates for a detected object, local associations can be used to triangulate and submit the refined position estimate to the tracking system. From this, a more reliable association and tracking of objects potentially seen from multiple sensors is achieved. This results in an improved de-duplication and a better common operational picture. In the military context, for example, drones and targets/assets potentially move quite fast through an environment and FOV overlaps happen spontaneously and may be short-lived. Therefore, the present linear system enables detecting such overlaps virtually without delay, which in turn enables using the obtained information for improved object detections and tracking in near real-time. However, present invention is not limited in this regard and can be used in other applications, e.g., for applications related to autonomous driving.

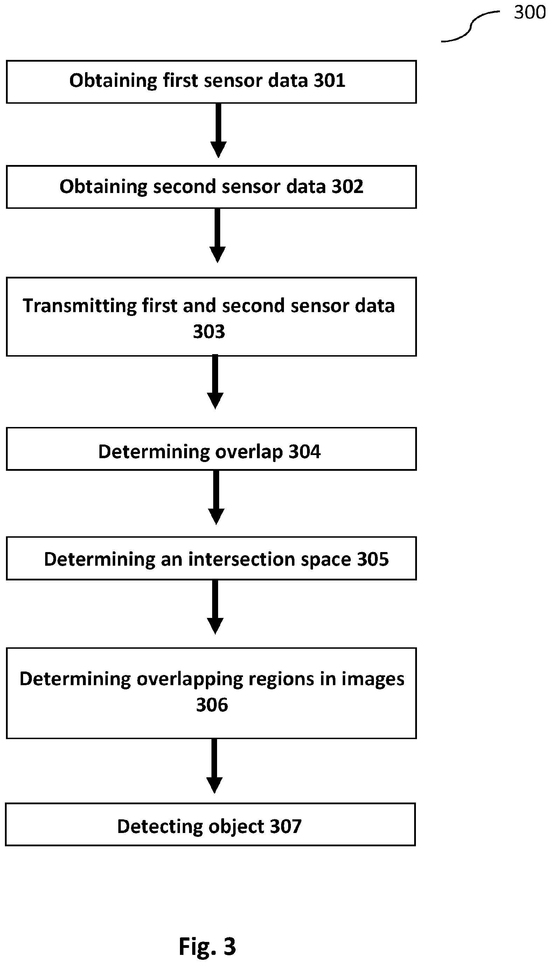

Figure 3 illustrates a flow chart of a method 300 according to an embodiment of the present disclosure. The method may be implemented using the system as shown in and described in connection with Figure 1. In steps 301 and 302, first and second sensor data is obtained, respectively. The first and second sensor data may represent images of an environment captured by respective cameras. The cameras have different FOVs, as shown in Figures 1 and 2. In step 303, the first and second sensor data are transmitted to a remote server or station for processing. In an alternative embodiment, the cameras may be coupled to local processors, e.g., in a drone carrying the cameras, and the processing is performed by the local processors.

In step 304, the method determines if the FOVs overlap. In step 305, following a determination that the FOVs overlap, an intersection space is determined, as described above. In step 306, the method determines regions in the images captured by the cameras that correspond to the intersection space. An object present in these regions of the images captured by both cameras can thus be identified as one and the same object, as the case may be. In step 307, the object is detected. Step 307 may also include identifying and classifying the detected object, as described above.

In summary, the described approach has at least the following technical effects and advantages:

- It is generalisable: the intersection space between any convex polyhedron can be computed.
- It is scalable: in the given example (Figure 2), the intersection space between only two FOV pyramids is considered. However, the described approach can be used to compute intersection space between multiple convex polyhedrons.
- It is independent of the sensor framework: the described approach enables couple multiple sensor frameworks, not just two, and not just identical sensors.
- It is efficient during runtime: to determine the intersection space, the solution of the linear system is computed. Linear programming is well known as such and efficient algorithms can be selected and used to solve the linear system.
- It can be used with any image sensor, regardless of the applied frequency range (IR, visual, etc.).

**Claims**

1. A computer-implemented method for image sensor fusion, the method comprising:

    determining an intersection space between respective fields of view capturable by a plurality of image sensors; and
    determining overlapping regions on respective images captured by the image sensors, wherein the overlapping regions correspond to at least a part of the intersection space.

2. The method of claim 1, wherein determining the intersection space includes approximating a field of view of an image sensor as a convex polyhedron.

3. The method of claim 2, wherein the field of view is approximated by determining a set of half-space inequalities.

4. The method of claim 3, wherein determining the intersection space includes:

    combining the set of half-space inequalities into a linear system; and
    solving the linear system.

5. The method of any of the preceding claims, wherein at least one of the fields of view is approximated as a pyramid, in particular a rectangular pyramid.

6. The method of any of the preceding claims, wherein determining the intersection space includes solving the or a linear system by parallel computing.

7. The method of any of the preceding claims, further comprising processing image frames captured by said plurality of image sensors corresponding to said overlapping regions to detect an object captured by at least two of the plurality of image sensors.

8. The method of any of claim 7, further comprising:
   classifying the detected object by allocating the detected object to a selected one of a plurality of object classes.

9. The method of claim 7 or 8, further comprising:
   selecting the detected object for localisation, in particular by triangulation.

10. The method of any of claims 7 to 9, comprising:

    determining a volume of the intersection space; and
    performing said processing only if the volume is below or above a predetermined threshold.

11. The method of claim 10, wherein said processing is performed only if said volume is within a predetermined range.

12. The method of any preceding claim, comprising:

    detecting the presence of one or more first ones of said plurality of image sensors; and
    controlling a vehicle carrying a second one of said plurality of image sensors to cause the field of view of said second image sensor to consecutively or simultaneously overlap the fields of view of one or more or all of said first image sensors.

13. A system comprising:

    a first image sensor having a first field of view;
    a second image sensor having a second field of view; and
    a processing unit configured to receive input signals from the image sensors and comprising one or more processors and one or more storage devices, wherein the processing unit is configured to perform the computer-implemented method of any one of the preceding claims.

14. The system of claim 13, wherein the first image sensor and/or the second image sensors is movable and/or mounted on a movable platform, in particular an unmanned aerial vehicle.

15. A computer program product for loading into a memory of a computer, comprising instructions, that, when executed by a processor of the computer, cause the computer to execute a computer-implemented method of any of claims 1-12.

**Amended claims in accordance with Rule 137(2) EPC.**

1. A computer-implemented method (300) for image sensor fusion, the method comprising:

   determining (305) an intersection space between respective fields of view capturable by a plurality of image sensors; and
   determining (306) overlapping regions on respective images captured by the image sensors, wherein the overlapping regions correspond to at least a part of the intersection space.

2. The method (300) of claim 1, wherein determining (305) the intersection space includes approximating a field of view of an image sensor as a convex polyhedron.

3. The method (300) of claim 2, wherein the field of view is approximated by determining a set of half-space inequalities.

4. The method (300) of claim 3, wherein determining (305) the intersection space includes:

   combining the set of half-space inequalities into a linear system; and
   solving the linear system.

5. The method (300) of any of the preceding claims, wherein at least one of the fields of view is approximated as a pyramid, in particular a rectangular pyramid.

6. The method (300) of any of the preceding claims, wherein determining (305) the intersection space includes solving the or a linear system by parallel computing.

7. The method (300) of any of the preceding claims, further comprising processing image frames captured by said plurality of image sensors corresponding to said overlapping regions to detect (307) an object captured by at least two of the plurality of image sensors.

8. The method (300) of any of claim 7, further comprising:
   classifying the detected object by allocating the detected object to a selected one of a plurality of object classes.

9. The method (300) of claim 7 or 8, further comprising:
   selecting the detected object for localisation, in particular by triangulation.

10. The method (300) of any of claims 7 to 9, comprising:

    determining a volume of the intersection space; and
    performing said processing only if the volume is below or above a predetermined threshold.

11. The method (300) of claim 10, wherein said processing is performed only if said volume is within a predetermined range.

12. The method (300) of any preceding claim, comprising:

    detecting the presence of one or more first ones of said plurality of image sensors; and
    controlling a vehicle carrying a second one of said plurality of image sensors to cause the field of view of said second image sensor to consecutively or simultaneously overlap the fields of view of one or more or all of said first image sensors.

13. A system comprising:

    a first image sensor having a first field of view;

a second image sensor having a second field of view; and
a processing unit configured to receive input signals from the image sensors and comprising one or more processors and one or more storage devices, wherein the processing unit is configured to perform the computer-implemented method of any one of the preceding claims.

14. The system of claim 13, wherein the first image sensor and/or the second image sensors is movable and/or mounted on a movable platform, in particular an unmanned aerial vehicle.

15. A computer program product for loading into a memory of a computer, comprising instructions, that, when executed by a processor of the computer, cause the computer to execute a computer-implemented method of any of claims 1-12.

**Fig. 1**

Drone-1: $A_1 \begin{bmatrix} x \\ y \\ z \end{bmatrix} \leq b_1$

Drone-2: $A_2 \begin{bmatrix} x \\ y \\ z \end{bmatrix} \leq b_2$

intersection-space: $\begin{bmatrix} A_1 \\ A_2 \end{bmatrix} \begin{bmatrix} x \\ y \\ z \end{bmatrix} \leq \begin{bmatrix} b_1 \\ b_2 \end{bmatrix}$

**Fig. 2**

300

Obtaining first sensor data 301

↓

Obtaining second sensor data 302

↓

Transmitting first and second sensor data
303

↓

Determining overlap 304

↓

Determining an intersection space 305

↓

Determining overlapping regions in images
306

↓

Detecting object 307

**Fig. 3**

Europäisches
Patentamt

European
Patent Office

Office européen
des brevets

**EUROPEAN SEARCH REPORT**

Application Number

**EP 23 20 2231**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2022/351519 A1 (KALIRAJAN ARUN MANIKANDAN [US] ET AL) 3 November 2022 (2022-11-03) * paragraphs [0029], [0034], [0070], [0133], [0160], [0161], [0179], [0191] – [0192]; figures 1,4,7 * * paragraphs [0214], [0217], [0219], [0229], [0230] * | 1-15 | INV. H04N23/66 G06T7/00 H04N23/695 H04N23/90 ADD. B64U101/30 H04N13/00 |
| Y | US 2019/116322 A1 (HOLZER STEFAN JOHANNES JOSEF [US] ET AL) 18 April 2019 (2019-04-18) * paragraphs [0007], [0008], [0028], [0043], [0045]; claims 1,11; figures 1, 5 * | 1-15 | |
| Y | US 2022/030214 A1 (SINHAROY INDRANIL [US] ET AL) 27 January 2022 (2022-01-27) * paragraphs [0021] – [0024]; figure 1 * | 1-15 | |
| Y | US 2022/270277 A1 (NIELSEN SIMON SAITO HAAGEN [US] ET AL) 25 August 2022 (2022-08-25) * paragraph [0129]; figure 3 * | 1,3 | TECHNICAL FIELDS SEARCHED (IPC) |
| Y | Anonymous: "Polyhedron – Wikipedia", , 29 September 2023 (2023-09-29), XP093141443, Retrieved from the Internet: URL:https://en.wikipedia.org/w/index.php?title=Polyhedron&oldid=1177773223 [retrieved on 2024-03-14] * pages 1,14 * | 2-6 | H04N B64C G06V G06T B64U |

-/--

The present search report has been drawn up for all claims

| Place of search | Date of completion of the search | Examiner |
|---|---|---|
| The Hague | 15 March 2024 | Mao, Pauline |

EPO FORM 1503 03.82 (P04C01)

Europäisches
Patentamt

European
Patent Office

Office européen
des brevets

# EUROPEAN SEARCH REPORT

Application Number

**EP 23 20 2231**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | Anonymous: "Convex polytope", , 20 September 2023 (2023-09-20), XP093141449, Retrieved from the Internet: URL:https://en.wikipedia.org/w/index.php?title=Convex_polytope&oldid=1176202072 [retrieved on 2024-03-14] * page 2 * ----- | 2-6 | |
| | | | **TECHNICAL FIELDS SEARCHED (IPC)** |

The present search report has been drawn up for all claims

| Place of search | Date of completion of the search | Examiner |
|---|---|---|
| The Hague | 15 March 2024 | Mao, Pauline |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## EP 4 535 811 A1

## ANNEX TO THE EUROPEAN SEARCH REPORT
## ON EUROPEAN PATENT APPLICATION NO.

EP 23 20 2231

This annex lists the patent family members relating to the patent documents cited in the above-mentioned European search report.
The members are as contained in the European Patent Office EDP file on
The European Patent Office is in no way liable for these particulars which are merely given for the purpose of information.

15-03-2024

| Patent document cited in search report | | Publication date | Patent family member(s) | | Publication date |
|---|---|---|---|---|---|
| US 2022351519 | A1 | 03-11-2022 | CN | 115297295 A | 04-11-2022 |
| | | | EP | 4087236 A1 | 09-11-2022 |
| | | | US | 2022351519 A1 | 03-11-2022 |
| US 2019116322 | A1 | 18-04-2019 | DE | 112018001822 T5 | 12-12-2019 |
| | | | JP | 2020505665 A | 20-02-2020 |
| | | | KR | 20190094254 A | 12-08-2019 |
| | | | US | 2019114836 A1 | 18-04-2019 |
| | | | US | 2019116322 A1 | 18-04-2019 |
| | | | US | 2020021752 A1 | 16-01-2020 |
| | | | WO | 2019075133 A1 | 18-04-2019 |
| US 2022030214 | A1 | 27-01-2022 | US | 2022030214 A1 | 27-01-2022 |
| | | | WO | 2022019719 A1 | 27-01-2022 |
| US 2022270277 | A1 | 25-08-2022 | US | 11348265 B1 | 31-05-2022 |
| | | | US | 2022270277 A1 | 25-08-2022 |

For more details about this annex : see Official Journal of the European Patent Office, No. 12/82